(19) Europäisches Patentamt
European Patent Office
Office européen des brevets

(11) **EP 2 199 832 A1**

(12) **DEMANDE DE BREVET EUROPEEN**

(43) Date de publication:
**23.06.2010 Bulletin 2010/25**

(51) Int Cl.:
*G01V 7/00* *(2006.01)*    *G01P 15/00* *(2006.01)*

(21) Numéro de dépôt: **09177626.0**

(22) Date de dépôt: **01.12.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.12.2008 FR 0807072**

(71) Demandeur: **Thales**
**92200 Neuilly Sur Seine (FR)**

(72) Inventeurs:
• **Schwartz, Sylvain**
**78470, SAINT REMY LES CHEVREUSE (FR)**

• **Pocholle, Jean-Paul**
**91290, LA NORVILLE (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(54) **Gravimetre a ondes de matiere integre sur puce atomique**

(57) Le domaine général de l'invention est celui des gravimètres, de type à ondes de matière permettant la mesure du champ de gravitation ou d'une accélération dans une direction de mesure donnée. Ce type de gravimètre utilise des atomes ultrafroids pour réaliser la mesure. Il comporte nécessairement un piège atomique (5) permettant d'immobiliser un nuage d'atomes ultrafroids (10) dans une configuration déterminée et des moyens de scission-recombinaison (7) du nuage en deux paquets atomiques disposés à des altitudes différentes de façon à créer un déphasage dû à la gravité. Le dispositif selon l'invention réunit l'ensemble de ces deux fonctions sur une puce atomique (3) comprenant principalement des moyens de génération d'un minimum local de champ magnétique autour d'un premier fil conducteur (30), un deuxième fil conducteur (31) et un troisième fil conducteur (32) sensiblement parallèles dans la zone du piège au premier fil conducteur et disposés symétriquement de part et d'autre de ce premier fil, le second fil étant traversé par un premier courant alternatif, le troisième fil étant traversé par un second courant alternatif de même amplitude, de même fréquence que le premier courant alternatif et de sens opposé, les amplitudes du premier et du second courants pouvant varier simultanément, l'amplitude maximale et la fréquence desdits courants étant suffisantes pour créer au niveau du nuage atomique un champ magnétique d'intensité supérieure à l'intensité magnétique nécessaire à la scission du nuage atomique en deux paquets atomiques.

**Description**

Le domaine de l'invention est celui de la gravimétrie, c'est-à-dire la mesure du champ de gravité local et/ou de son gradient, et plus particulièrement de la gravimétrie de haute précision. Le champ d'application des gravimètres de haute précision est extrêmement vaste. On peut citer, à titre non limitatif, la recherche d'anomalies du champ gravitationnel pour la détection d'objets cachés tels que des cavités ou des tunnels, les applications spatiales, la navigation inertielle ou les applications géophysiques comme la prospection pétrolière. Il est, bien entendu, possible d'utiliser ce type de dispositif comme accéléromètre.

Les gravimètres de haute précision existant actuellement peuvent être classés en deux catégories. La première repose sur des effets de mécanique classique. Grâce à l'étude d'objets massiques macroscopiques, qui peuvent être, par exemple, des miroirs en coin de cube en chute libre associés à une détection optique, on détermine la gravité locale. Cependant, la complexité, la fragilité, le volume et le coût de tels objets limitent leur utilisation pratique.

La seconde catégorie de gravimètres à hautes performances repose sur l'utilisation d'ondes de matière. Ces dernières, qui sont associées à toute particule massive d'après les lois de la mécanique quantique, sont en effet sensibles au champ de gravitation local, qui induit un déphasage pouvant être mesuré par interférométrie atomique. On peut démontrer que, pour que les effets des ondes de matière soient pratiquement observables, il est nécessaire d'utiliser des atomes refroidis à des températures situées à quelques milliardièmes de degrés au-dessus du zéro absolu. On appellera dans la suite du texte ces atomes des atomes froids ou ultrafroids.

Le principe de ce type de capteur a déjà été démontré avec succès dans plusieurs laboratoires. On se reportera, par exemple, à la publication de M. Snadden, J. McGuirk, P. Bouyer, K. Haritos and M. Kasevich, Measurement of the Earth's Gravity Gradient with an Atom Interferometer-Based Gravity Gradiometer, Physical Review Letters 81, pages 971-974 (1998). Dans cet exemple, le principe de la mesure repose sur l'utilisation de transferts d'impulsion entre atomes froids et faisceaux lasers par transition Raman. On citera aussi la publication de M. Kasevich and S. Chu, Atomic interferometry using stimulated Raman transitions, Physical Review Letters 67, pages 181-184 (1991) sur ce sujet. Les performances obtenues avec ce type de dispositif sont comparables, voire supérieures aux gravimètres fondés sur la mécanique classique précédemment cités. L'encombrement reste toutefois une limitation forte de ce type de dispositif pour des utilisations pratiques, même si de récents efforts ont permis de mettre en oeuvre un gravimètre atomique embarqué sur un camion, dans le cadre du projet « PINS » à l'université de Stanford.

Parallèlement, d'importants efforts ont été déployés ces dernières années pour intégrer une partie des fonctions de piégeage, de refroidissement et de manipulation d'atomes froids sur des dispositifs de type « puces », ces dernières présentent l'avantage de la compacité mais aussi d'un meilleur contrôle des champs magnétiques nécessaires et d'une consommation électrique réduite. De plus, l'intérêt d'utiliser et d'intégrer des champs radiofréquences pour la manipulation cohérente des atomes, souligné dès 2000 dans un article de O. Zobay and B. Garraway, Two-Dimensional Atom Trapping in Field-Induced Adiabatic Potentials, Physical Review Letters 86, pages 1195-1198 (2001) a été récemment démontré expérimentalement par la séparation cohérente en deux parties égales d'un condensat de Bose-Einstein en 2006, ce qui constitue l'équivalent atomique d'une lame séparatrice pour un laser, composant-clé pour la réalisation d'interféromètres atomiques. On se reportera, pour plus d'informations, à la publication de T. Schumm et al., Matter-wave interferometry in a double well on an atom chip, Nature Physics 1, pages 57-62 (2005).

Le gravimètre selon l'invention propose, en s'appuyant sur les technologies existantes en matière de gravimétrie atomique et de manipulation cohérente d'ondes de matière sur puces atomiques, une architecture originale de capteur, pour la mesure du champ de gravité local, de son gradient ou des accélérations auxquelles est soumis le dispositif.

Plus précisément, l'invention a pour objet un gravimètre, de type à ondes de matière permettant la mesure du champ de gravitation ou d'une accélération dans une direction de mesure donnée, ledit gravimètre comprenant au moins :

une puce électronique comportant un plan de mesure ;
des moyens de génération, de capture et de refroidissement d'un nuage d'atomes ultrafroids et un piège à atomes permettant d'immobiliser le nuage d'atomes ultrafroids à une distance prédéterminée dudit plan de mesure ;
le piège magnétique comportant un ensemble de fils conducteurs intégrés à ladite puce et de bobinages extérieurs permettant la réalisation d'un minimum local de champ magnétique au voisinage de la puce ; un tel piège peut, par exemple, consister, d'une part en un premier fil conducteur intégré à ladite puce parcouru par un courant $I_{DC}$ sensiblement constant et d'autre part en des moyens de génération d'un champ magnétique homogène dont les lignes de champ sont, dans la zone du piège, parallèles au plan de mesure et perpendiculaires à la direction du premier fil conducteur ;
des moyens de scission du nuage atomique en deux paquets d'atomes pendant une durée déterminée d'une distance déterminée dans une direction parallèle à la direction de mesure, lesdits moyens permettant également la recombinaison des deux paquets en un seul nuage atomique ;
des moyens de mesure optique du déphasage introduit sur le nuage atomique après recombinaison ;
des moyens électroniques de contrôle, de commande et d'asservissement des différents moyens du gravimètre ;

**caractérisé en ce que** les moyens de séparation comportent essentiellement un deuxième fil conducteur et un troisième fil conducteur sensiblement parallèles dans la zone du piège à un premier fil conducteur principal et disposés symétriquement de part et d'autre de ce premier fil, le second fil étant traversé par un premier courant alternatif, le troisième fil étant traversé par un second courant alternatif de même amplitude, de même fréquence que le premier courant alternatif et de sens opposé, les amplitudes du premier et du second courant pouvant varier simultanément, l'amplitude maximale et la fréquence desdits courants étant suffisantes pour créer au niveau du nuage atomique un champ magnétique alternatif de scission d'intensité supérieure à l'intensité magnétique nécessaire à la scission du nuage atomique en deux paquets atomiques dans la direction de polarisation dudit champ magnétique.

Avantageusement, les moyens de refroidissement du nuage d'atomes ultrafroids et le piège à atomes sont agencés de façon que le nuage d'atomes soit un condensat de Bose-Einstein.

De plus, le gravimètre peut comporter au moins un second piège à atomes identique au premier piège à atomes, disposé au voisinage d'une seconde zone du plan de mesure de la puce électronique, le premier, le second et le troisième fil conducteur étant communs aux deux pièges, les moyens électroniques comprenant des fonctions permettant de faire des comparaisons ou de réaliser des fonctions mathématiques entre les mesures obtenues par le premier piège et les mesures obtenues par le second piège.

L'invention concerne également un procédé de mesure du champ de gravitation ou d'une accélération dans une direction de mesure donnée au moyen d'un gravimètre, de type à ondes de matière, ledit gravimètre comprenant au moins :

une puce électronique comportant un plan de mesure ;
des moyens de génération, de capture et de refroidissement d'un nuage d'atomes ultrafroids et un piège à atomes permettant d'immobiliser le nuage d'atomes ultrafroids ;
le piège comportant d'une part un premier fil conducteur principal et des fils conducteurs intégrés à ladite puce et d'autre part des moyens de génération d'un champ magnétique extérieurs résultant en un minimum local de champ magnétique au voisinage de la puce ;
des moyens de scission du nuage atomique en deux paquets d'atomes, lesdits moyens de scission comportant essentiellement un deuxième fil conducteur et un troisième fil conducteur sensiblement parallèles dans la zone du piège au premier fil conducteur et disposés symétriquement de part et d'autre de ce premier fil, le second fil étant traversé par un premier courant alternatif, le troisième fil étant traversé par un second courant alternatif de même amplitude, de même fréquence que le premier courant alternatif et de sens opposé, les amplitudes du premier et du second courant pouvant varier simultanément,
des moyens de mesure optique du déphasage introduit sur le nuage atomique après recombinaison ;
des moyens électroniques de contrôle, de commande et d'asservissement des différents moyens du gravimètre ;

**caractérisé en ce que** la réalisation d'une mesure comporte les phases suivantes :

Phase 1 dite de génération : Génération, refroidissement et piègeage d'un nuage d'atomes ultrafroids à une distance prédéterminée dudit plan de mesure ;
Phase 2 dite de scission : Augmentation progressive et simultanée des premier et second courants alternatifs jusqu'à ce que l'amplitude et la fréquence desdits courants soient suffisantes pour créer au niveau du nuage atomique un champ magnétique d'intensité supérieure à l'intensité magnétique nécessaire à la scission du nuage atomique en deux paquets atomiques, les deux paquets étant séparés d'une distance déterminée dans une direction parallèle à la direction de mesure ;
Phase 3 dite d'interrogation : Maintien des amplitudes des courants alternatifs de façon à conserver la scission pendant une durée temporelle prédéterminée ;
Phase 4 dite de recombinaison : Baisse des amplitudes des courants alternatifs de façon à regrouper les deux paquets atomiques en un seul nuage atomique déphasé ;
Phase 5 dite de mesure : Mesure du déphasage par les moyens de mesure optique.

L'invention sera mieux comprise et d'autres avantages apparaîtront à la lecture de la description qui va suivre donnée à titre non limitatif et grâce aux figures annexées parmi lesquelles :

La figure 1 représente le principe technique général d'un gravimètre à ondes de matière ;
Les figures 2a et 2b représentent un principe possible pour générer un minimum local de champ magnétique à la surface d'une puce ;
La figure 3 représente une vue de dessus du plan de mesure d'une première puce électronique du gravimètre selon l'invention comportant un seul piège à atomes ;
Les figures 4a et 4b représentent deux étapes importantes du procédé de mesure gravimétrique selon l'invention ;

La figure 5 représente une vue de dessus du plan de mesure d'une seconde puce électronique du gravimètre selon l'invention comportant une pluralité de pièges à atomes.

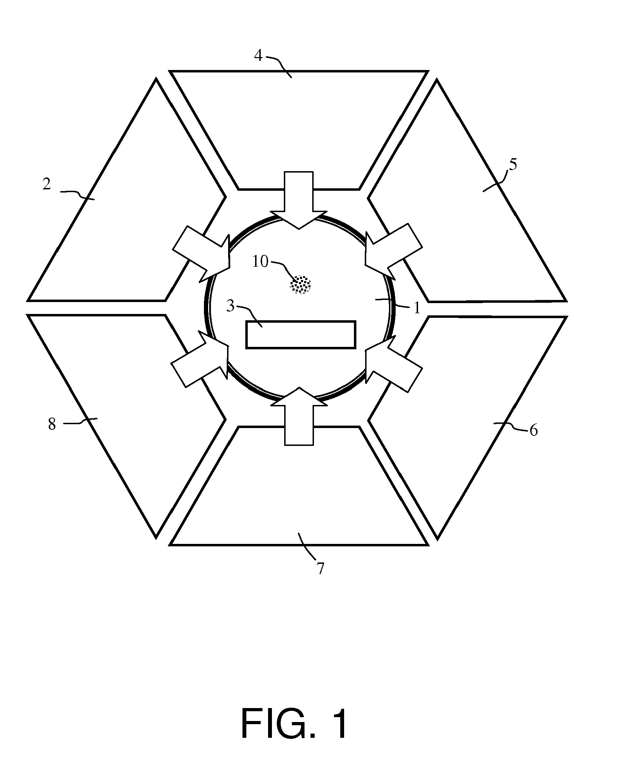

La figure 1 représente le synoptique général des principaux composants techniques d'un gravimètre à ondes de matière selon l'invention. Le dispositif comprend une enceinte à vide 1 entretenue par exemple à l'aide d'une pompe ionique et comportant un blindage magnétique, un générateur d'atomes 2, plus connu sous le terme anglo-saxon de « dispenser » atomique. Ce dispenser est, par exemple, un filament chauffant délivrant une vapeur de rubidium. Le dispositif comprend également une puce atomique 3 et éventuellement des sources de champ magnétique extérieurs, un premier ensemble optique 4 permettant la capture et le pré-refroidissement des atomes 10 avant leur entrée dans le piège magnétique 5, ainsi qu'un second ensemble optique de détection 6 à la fin de la séquence qui peut être assuré, par exemple, par une caméra de type CCD. Le dispositif comporte également des moyens de scission 7 du nuage atomique. Un dispositif électronique 8 est également nécessaire pour assurer la commande des différents éléments et la synchronisation temporelle des différentes étapes de la mesure allant de la capture à la détection des atomes. La publication de S. Du et al., Atom-chip Bose-Einstein condensation in a portable vacuum cell, Physical Review A 70, 053606 (2004) est un bon exemple d'intégration de ce type de dispositif dans un volume compact.

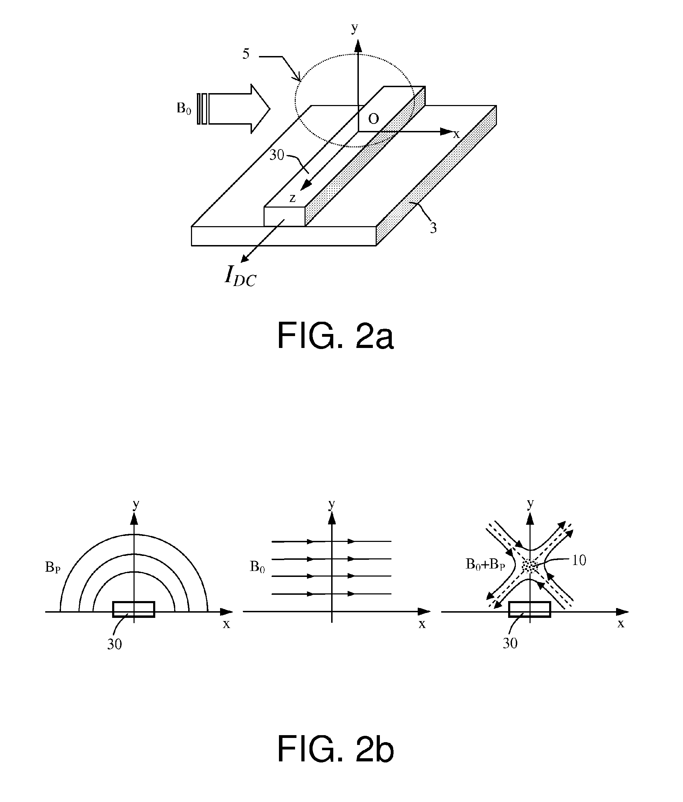

Dans le dispositif selon l'invention, le piégeage des atomes est assuré par un piège magnétique 5 dont le principe, connu de l'homme du métier, est schématiquement représenté en figures 2a et 2b. Le nuage d'atomes froids est piégé par un minimum de champ magnétique créé au voisinage d'une puce 3 par un ensemble de fils imprimés 30 sur cette dernière, éventuellement combinés à des sources de champ magnétique extérieures. Le piégeage des atomes 10 repose sur l'interaction entre le champ magnétique et le dipôle magnétique total des atomes, qui sont attirés ou repoussés, selon leur état interne, par les extrema de champ. Dans l'exemple des figures 2, le minimum de champ est créé par la combinaison des champs magnétiques $B_P$ générés par les fils conducteurs 30 de la puce 5 et d'un champ magnétique constant ou biais $B_0$ généré par des bobines extérieures non représentées sur les figures 2. La figure 2a représente une vue en perspective d'une partie de la puce 3 et du fil conducteur 30 ainsi que le repère cartésien (0, x, y, z) qui est utilisé pour les figures suivantes. La direction de mesure est parallèle à l'axe Oy. La figure 2b montre, dans un plan (O, x, y), à gauche les lignes de champ magnétiques semi-circulaires créées par un fil conducteur 30 traversé par un courant $I_{DC}$, au centre les lignes de champ rectilignes dues au « biais magnétique » et à droite la superposition des champs magnétiques qui crée au-dessus du fil conducteur 30 le piège magnétique. Les lignes de champ ont alors dans un plan (0, x, y) en première approximation, une forme en X majuscule comme indiqué sur la figure 2b, les atomes étant piégés au centre du X. Un tel piège peut éventuellement être anisotrope, par exemple fortement confinant dans deux directions de l'espace et plus faiblement confinant dans la troisième. La description détaillée de l'ensemble des éléments permettant d'obtenir une telle source d'atomes froids à la surface d'une puce est présenté dans la littérature. On peut, par exemple, se reporter à la publication de R. Folman et al., Microscopic atom optics: from wires to an atom chips, Advances in Atomic, Molecular, and Optical Physics 48, pages 263-356 (2002).

On sait, d'après les références précédemment citées, qu'il est possible, à l'aide d'une telle configuration, d'obtenir un ensemble d'atomes froids dans un piège magnétique à une distance $h_0$ de la puce donnée approximativement par :

$$h_0 \approx \frac{\mu_0 I_{DC}}{2\pi B_0}, \qquad\qquad (A)$$

où $\mu_0$ est la perméabilité magnétique du vide. L'ordre de grandeur typique pour la distance $h_0$ est la centaine de micromètres. Celle-ci peut être modifiée et donc les atomes transportés le long de l'axe y en faisant varier les paramètres $I_{DC}$ ou $B_0$.

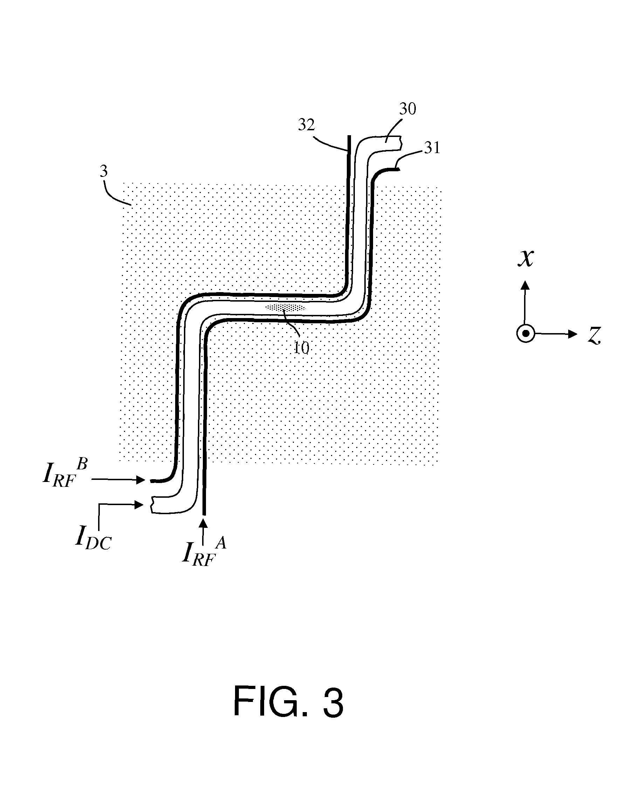

Le dispositif doit également comporter des moyens de scission du nuage atomique. Aussi, dans le dispositif selon l'invention, de part et d'autre du fil principal 30, on dispose deux autres fils 31 et 32 parcourus par des courants alternatifs $I_{RF}^A$ et $I_{RF}^B$, destinés à générer un champ radiofréquence pour la séparation cohérente des atomes. La figure 3 représente une vue de dessus de cette disposition dans laquelle le fil central parcouru par un courant constant est représenté en blanc et les fils latéraux, disposés symétriquement par rapport au fil central et parcourus par des courants alternatifs sont représentés en traits noirs. On sait également que l'application d'un champ radiofréquence permet de modifier le potentiel vu par les atomes, en induisant un couplage entre sous-niveaux magnétiques. On se reportera à la publication de Lesanovsky et al., Adiabatic radio-frequency potentials for the coherent manipulation of matter waves, Physical Review A 73, 033619 (2006) sur ce sujet.

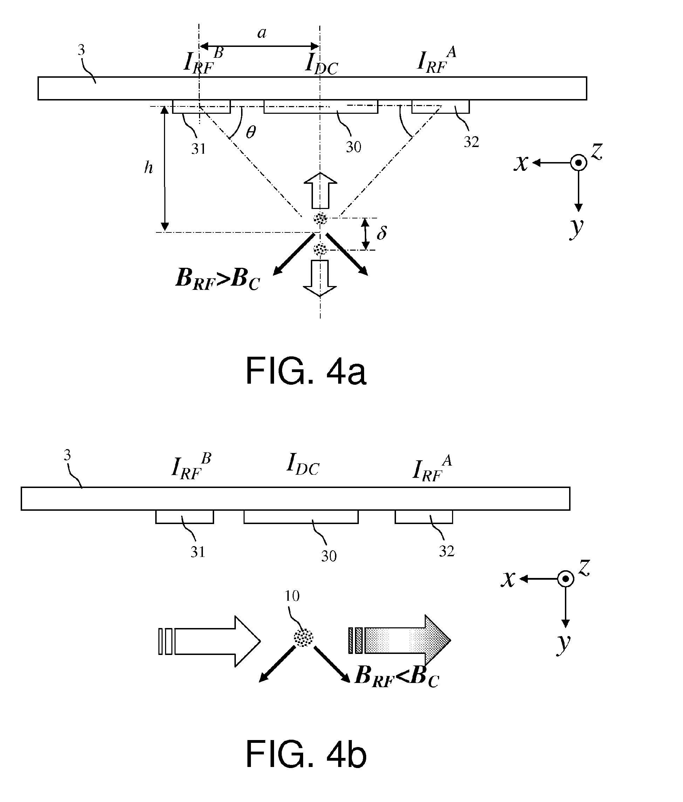

Plus précisément, la figure 4a représente l'application d'un champ radiofréquence $B_{RF}$ polarisé selon l'axe y et généré au niveau du centre du piège atomique, en appliquant par exemple dans les fils radiofréquences 31 et 32 les intensités suivantes :

$$I_{RF}{}^{A} = I_0 \cos(\omega_{RF}t) \qquad \text{et} \qquad I_{RF}{}^{B} = -I_0 \cos(\omega_{RF}t) . \qquad\qquad \text{(B)}$$

En notant a la distance séparant un fil périphérique 31 ou 32 du fil central 30 et $\theta$, l'angle tel que $tg(\theta) = \dfrac{h_0}{a}$, le champ magnétique radiofréquence vu par les atomes peut alors s'exprimer en fonction des paramètres géométriques $\theta$ et a comme suit :

$$\mathbf{B}_{RF} = B_{RF}{}^{0} \cos(\omega_{RF}t)\sin\theta\, \mathbf{e}_y \qquad \text{avec} \qquad B_{RF}{}^{0} = \frac{\mu_0 I_0 \cos\theta}{2\pi a} .$$

Dans la publication de Lesanovsky déjà citée, on démontre que lorsque la valeur de $B_{RF}{}^{0}\sin\theta$ est supérieure à une certaine valeur critique $B_C$, ce champ induit une séparation verticale du nuage atomique en deux parties distantes de la valeur $\delta$ suivante :

$$\delta = \frac{\sqrt{2}}{G} \sqrt{(B_{RF}{}^{0}\sin\theta)^2 - B_C{}^{2}} \qquad \text{avec} \qquad G \approx \frac{B_0}{h_0} . \qquad\qquad \text{(C)}$$

Le paramètre G est le gradient du champ quadripolaire du piège de Ioffe. Toujours d'après la même référence, le champ radiofréquence critique conduisant à la séparation du nuage atomique en deux parties est donné par :

$$B_C = 2\sqrt{B_{0z}\frac{\kappa B_{0z} - \hbar\omega_{RF}}{|\kappa|}} ,$$

où $B_{0z}$ est la composante du champ magnétique constant qu'il est nécessaire d'appliquer selon l'axe z pour obtenir un piège confinant dans les trois dimensions et où le facteur k est donné par l'expression k=$g_F\mu_B$, où $\mu_B$ est le magnéton de Bohr et $g_F$ le facteur gyromagnétique noté g-factor du niveau considéré. Naturellement, pour obtenir effectivement une séparation du paquet d'atomes en deux paquets, la profondeur du puits de potentiel selon l'axe y doit être plus grande que la différence d'énergie potentielle induite par gravité.

Ces deux outils étant introduits, piégeage magnétique des atomes et séparation par radiofréquence, les étapes du procédé selon l'invention qui conduit à la mesure de gravité selon l'axe y sont:

1) capture et refroidissement des atomes selon les méthodes classiques décrites dans la littérature, ayant pour résultat l'obtention d'un nuage d'atomes froids, avantageusement un condensat de Bose-Einstein au centre du piège magnétique, situé à une distance h, donnée par l'équation (A), au dessus de la puce atomique ;

2) application progressive dans les fils conducteurs 31 et 32 d'un champ radiofréquence selon l'équation (B), ce qui conduit à la séparation verticale adiabatique du nuage d'atomes d'une distance $\delta$, donnée par l'équation (C) comme montré sur la figure 4a qui représente une vue en coupe dans le plan (O, x, y) de la puce atomique au niveau du piège atomique ;

3) phase d'interrogation d'une durée T, pendant laquelle les champs peuvent être maintenus constants ou être modifiés dans le but d'accroître la sensibilité ;

4) phase de recombinaison, pendant laquelle le champ radiofréquence est progressivement ramené en-dessous de la valeur critique de séparation ;

5) phase de détection pouvant avoir lieu in situ ou avantageusement après une phase de temps de vol. Le signal utile est constitué par la phase du réseau de densité atomique formé sur le nuage gazeux, et peut être obtenue par imagerie par absorption. Cette phase est illustrée en figure 4b où la détection optique est symbolisée par deux flèches droites horizontales.

On démontre que, voir à ce propos : C. Cohen-Tannoudji, Propagation d'une particule dans un champ de pesanteur, Cours du Collège de France du 15 décembre 1992 :

le déphasage $\Phi$ subi par un atome de masse M suivant une trajectoire y(t) dans un champ de pesanteur g, supposé aligné selon l'axe y, est donné par l'expression suivante :

$$\Phi = \frac{Mg}{\hbar} \int y(t)\mathrm{d}t \ .$$

Dans la version la plus simple de l'invention, les deux paquets d'atomes se trouvent à des altitudes $y = h \pm \delta/2$ pendant la durée d'interrogation T, d'où le déphasage $\Delta\Phi$ suivant entre les deux paquets d'atomes après recombinaison :

$$\Delta\Phi = \frac{Mg}{\hbar} \delta T \ . \hspace{4cm} (D)$$

La mesure de $\Delta\Phi$ permet de remonter à celle de la gravité g à condition de connaître de façon suffisamment précise les valeurs de $\delta$ et de T, ce qui ne présente pas de difficultés particulières.

Il convient de noter que lorsque le dispositif décrit ci-dessus est soumis à une accélération, celle-ci vient s'ajouter au champ de pesanteur dans l'expression du déphasage total. Cela montre que le dispositif selon l'invention peut être utilisé comme accéléromètre si l'on suppose le champ de pesanteur connu, ou si l'axe de mesure est orienté perpendiculairement au champ de pesanteur.

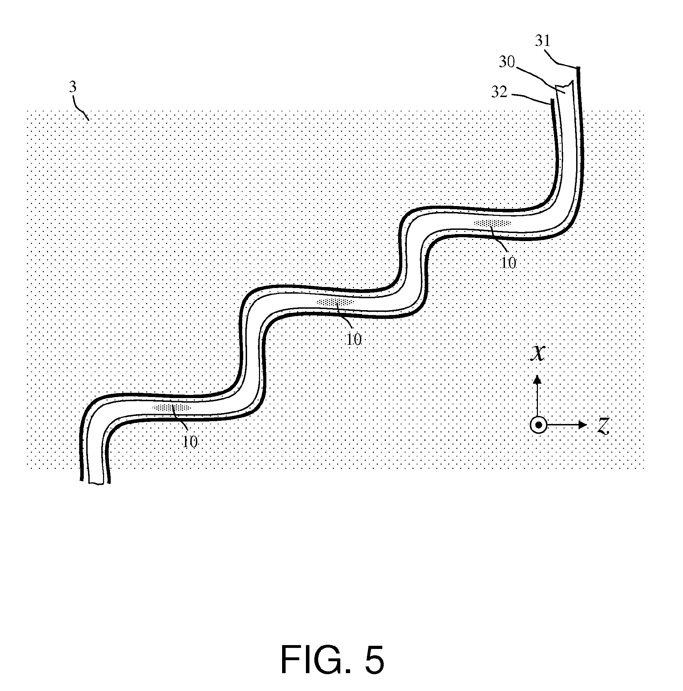

Lorsque des mesures de champ de gravité précises doivent être effectuées, il convient de s'affranchir des effets autres que la gravité pouvant introduire un déphasage entre les deux paquets d'ondes. Ces effets sont par exemple les vibrations mécaniques, ou les inhomogénéités des potentiels de piégeage. Le dispositif de mesure selon l'invention peut comporter plusieurs des capteurs décrits précédemment sur la même puce comme indiqué sur la figure 5, afin d'obtenir un ensemble de mesures de phase qui soient sensibles aux mêmes effets parasites comme les vibrations mécaniques ou les inhomogénéités des potentiels de piégeage. La grandeur mesurée n'est alors plus le champ de gravité absolue, mais plutôt la variation de champ de gravité d'un capteur à l'autre. La finesse de la détection obtenue augmente alors avec le nombre de capteurs. Des effets liés à l'anisotropie des objets détectés peuvent également être observés. Avantageusement, un maximum de moyens tels que les champs magnétiques et les courants électriques qui leur sont associés sont mis en commun ou reproduits à l'identique d'un capteur à l'autre, afin d'optimiser l'effet de réjection recherché.

Il ressort de l'équation (D) que la sensibilité d'un gravimètre atomique est déterminée par le paramètre $\delta T$, c'est-à-dire le produit de la séparation spatiale et du temps d'interaction. Si l'on prend comme référence le gravimètre atomique réalisé au SYRTE (SYstème de Référence Temps-Espace) de l'Observatoire de Paris, il ressort de la thèse de D. Holleville, Conception et réalisation d'un gyromètre à atomes froids fondé sur l'effet Sagnac pour les ondes de matières, Thèse de doctorat de l'université Paris XI (2001) qu'une micro-accélération de $2\ 10^{-4}$ m/s$^2$ produit un déphasage de $2\pi$ avec des atomes de césium et un $\delta T$ valant approximativement $1.5\ 10^{-2}$ m.s. Avec le dispositif selon l'invention, il est possible d'atteindre des valeurs typiques de l'ordre de $\delta \approx 100\ \mu$m et T=1 s, d'où $\delta T \approx 10^{-4}$ m.s. Cette perte de sensibilité par rapport au dispositif du SYRTE peut être compensée d'une part par une amélioration du rapport signal à bruit en utilisant un laser à atomes au lieu des nuages thermiques utilisés dans le gravimètre atomique réalisé au SYRTE, et d'autre part par la mise en série de plusieurs capteurs sur la même puce, qui permet la réjection des effets communs. L'intégration sur puce apporte de plus une amélioration très significative au niveau de l'intégration et du volume final du gravimètre.

En résumé, les principaux avantages du dispositif selon l'invention sont :

-   Intégration sur une puce unique de un ou de plusieurs gravimètres à onde de matière afin de rejeter les effets parasites communs et permettant la mesure différentielle ;
-   Utilisation possible de sources atomiques cohérentes appelées condensats de Bose-Einstein grâce à l'utilisation de séparatrices radiofréquences en lieu et place des faisceaux Raman. On améliore ainsi le rapport signal à bruit et on diminue la puissance optique requise ;
-   Gain en compacité, en intégration et en consommation électrique grâce à l'intégration sur puce atomique ;
-   Rapport signal à bruit bien meilleur que les sources atomiques classiques grâce aux sources atomiques cohérentes, d'où des performances possibles équivalentes aux meilleurs gravimètres atomiques actuels et dans tous les cas bien supérieures aux gravimètres classiques ;

- Mise en série de plusieurs capteurs qui permet d'une part d'améliorer considérablement la stabilité du biais sur ce dispositif, et d'autre part de réaliser de nouveaux modes de détection d'anomalies du champ gravitationnels, reposant non plus sur le gradient mais sur une combinaison d'un grand nombre (supérieur à 3) de points de mesure différents.

**Revendications**

1. Gravimètre, de type à ondes de matière permettant la mesure du champ de gravitation ou d'une accélération dans une direction de mesure donnée, ledit gravimètre comprenant au moins :

   une puce électronique (3) comportant un plan de mesure ;
   des moyens de génération, de capture et de refroidissement (1, 2, 4) d'un nuage d'atomes ultrafroids (10) et un piège à atomes (5) permettant d'immobiliser le nuage d'atomes ultrafroids à une distance prédéterminée dudit plan de mesure ;
   le piège comportant d'une part au moins un premier fil conducteur (30) principal intégré à ladite puce et d'autre part des moyens de génération d'un champ magnétique extérieur résultant en un minimum local de champ magnétique au voisinage de la puce ;
   des moyens de scission du nuage atomique (7, 31, 32) en deux paquets d'atomes pendant une durée déterminée d'une distance déterminée dans une direction parallèle à la direction de mesure, lesdits moyens permettant également la recombinaison des deux paquets en un seul nuage atomique ;
   des moyens de mesure optique (6) du déphasage introduit sur le nuage atomique après recombinaison ;
   des moyens électroniques (8) de contrôle, de commande et d'asservissement des différents moyens du gravimètre ;

   les moyens de séparation comportant essentiellement un deuxième fil conducteur (31) et un troisième fil conducteur (32) sensiblement parallèles dans la zone du piège au premier fil conducteur et disposés symétriquement de part et d'autre de ce premier fil, le second fil étant traversé par un premier courant alternatif, le troisième fil étant traversé par un second courant alternatif de même amplitude, de même fréquence que le premier courant alternatif et de sens opposé, les amplitudes du premier et du second courant pouvant varier simultanément, l'amplitude maximale et la fréquence desdits courants étant suffisantes pour créer au niveau du nuage atomique un champ magnétique de scission d'intensité supérieure à l'intensité magnétique nécessaire à la scission du nuage atomique en deux paquets atomiques dans la direction de polarisation dudit champ magnétique, **caractérisé en ce que** le gravimètre comporte au moins un second piège à atomes identique au premier piège à atomes, disposé au voisinage d'une seconde zone du plan de mesure de la puce électronique, le premier, le second et le troisième fil conducteur (30, 31, 32) étant communs aux deux pièges, les moyens électroniques (8) comprenant des fonctions permettant de faire des comparaisons ou de réaliser des fonctions mathématiques entre les mesures obtenues par le premier piège et les mesures obtenues par le second piège.

2. Gravimètre selon la revendication 1, **caractérisé en ce que** les moyens de refroidissement des nuages d'atomes ultrafroids et les pièges à atomes sont agencés de façon que les nuages d'atomes soient des condensats de Bose-Einstein.

3. Procédé de mesure du champ de gravitation ou d'une accélération dans une direction de mesure donnée au moyen d'un gravimètre, de type à ondes de matière, ledit gravimètre comprenant au moins :

   une puce électronique (3) comportant un plan de mesure ;
   des moyens de génération, de capture et de refroidissement (1, 2, 4) d'un premier et d'un second nuages d'atomes ultrafroids (10) et un premier et un second piège à atomes (5) permettant d'immobiliser les nuages d'atomes ultrafroids ;
   les pièges comportant d'une part un premier fil conducteur principal (30) intégré à ladite puce et d'autre part des moyens de génération d'un champ magnétique extérieurs résultant en un minimum local de champ magnétique au voisinage de la puce ;
   des moyens de scission (7, 31, 32) de chaque nuage atomique en deux paquets d'atomes, lesdits moyens de scission comportant essentiellement un deuxième fil conducteur et un troisième fil conducteur sensiblement parallèles dans la zone du piège au fil conducteur principal et disposés symétriquement de part et d'autre de ce premier fil, le second fil étant traversé par un premier courant alternatif, le troisième fil étant traversé par un second courant alternatif de même amplitude, de même fréquence que le premier courant alternatif et de sens opposé, les amplitudes du premier et du second courant pouvant varier simultanément,
des moyens de mesure optique (6) du déphasage introduit sur chaque nuage atomique après recombinaison ;
des moyens électroniques (8) de contrôle, de commande et d'asservissement des différents moyens du gravimètre ;

**caractérisé en ce que** la réalisation d'un mesure comporte les phases suivantes :

Phase 1 dite de génération : Génération, refroidissement et piégeage des nuages d'atomes ultrafroids à une hauteur prédéterminée au voisinage dudit plan de mesure ;

Phase 2 dite de scission : Augmentation progressive et simultanée des premier et second courants alternatifs jusqu'à ce que l'amplitude et la fréquence desdits courants soient suffisantes pour créer au niveau des nuages atomiques un champ magnétique de scission d'intensité supérieure à l'intensité magnétique nécessaire à la scission de chaque nuage atomique en deux paquets atomiques, les deux paquets étant séparés d'une distance déterminée dans une direction parallèle à la direction de mesure ;

Phase 3 dite d'interrogation : Maintien des amplitudes des courants alternatifs de façon à conserver la scission pendant une durée temporelle prédéterminée ;

Phase 4 dite de recombinaison : Baisse des amplitudes des courants alternatifs de façon à regrouper les deux paquets atomiques de chaque nuage atomique en un seul nuage atomique déphasé ;

Phase 5 dite de mesure : Mesure du déphasage par les moyens de mesure optique.

FIG. 1

FIG. 2a

FIG. 2b

FIG. 3

FIG. 4a

FIG. 4b

FIG. 5

Europäisches
Patentamt

European
Patent Office

Office européen
des brevets

# RAPPORT DE RECHERCHE EUROPEENNE

Numéro de la demande

EP 09 17 7626

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZATEZALO A ET AL: "Bose-Einstein interferometry and its applications to precision undersea navigation" POSITION, LOCATION AND NAVIGATION SYMPOSIUM, 2008 IEEE/ION, IEEE, PISCATAWAY, NJ, USA, 5 mai 2008 (2008-05-05), pages 940-950, XP031340859 ISBN: 978-1-4244-1536-6 * page 940 - page 943 * * page 949, colonne de droite - page 950, colonne de gauche * ----- | 1,3 | INV. G01V7/00 G01P15/00 |
| A,D | LESANOVSKY I ET AL: "Adiabatic radio-frequency potentials for the coherent manipulation of matter waves" PHYSICAL REVIEW A (ATOMIC, MOLECULAR, AND OPTICAL PHYSICS) APS THROUGH AIP USA, vol. 73, no. 3, 23 mars 2006 (2006-03-23), pages 33619-1-5, XP002535766 ISSN: 1050-2947 * pages 033619-4 - pages 033619-5; figure 2 * ----- | 1,3 | |
| | | | **DOMAINES TECHNIQUES RECHERCHES (IPC)** G01V G01P |

Le présent rapport a été établi pour toutes les revendications

| Lieu de la recherche | Date d'achèvement de la recherche | Examinateur |
|---|---|---|
| La Haye | 17 mars 2010 | Häusser, Thomas |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. Snadden ; J. McGuirk ; P. Bouyer ; K. Haritos ; M. Kasevich.** Measurement of the Earth's Gravity Gradient with an Atom Interferometer-Based Gravity Gradiometer. *Physical Review Letters,* 1998, vol. 81, 971-974
- **M. Kasevich ; S. Chu.** Atomic interferometry using stimulated Raman transitions. *Physical Review Letters,* 1991, vol. 67, 181-184
- **O. Zobay ; B. Garraway.** Two-Dimensional Atom Trapping in Field-Induced Adiabatic Potentials. *Physical Review Letters,* 2001, vol. 86, 1195-1198
- **T. Schumm et al.** Matter-wave interferometry in a double well on an atom chip. *Nature Physics,* 2005, vol. 1, 57-62
- **S. Du et al.** Atom-chip Bose-Einstein condensation in a portable vacuum cell. *Physical Review,* 2004, vol. A 70, 053606
- **R. Folman et al.** Microscopic atom optics: from wires to an atom chips, Advances in Atomic. *Molecular, and Optical Physics,* 2002, vol. 48, 263-356
- **Lesanovsky et al.** Adiabatic radio-frequency potentials for the coherent manipulation of matter waves. *Physical Review,* 2006, vol. A 73, 033619
- **C. Cohen-Tannoudji.** Propagation d'une particule dans un champ de pesanteur. *Cours du Collège de France,* 15 Décembre 1992